# EUROPEAN PATENT SPECIFICATION

(11) **EP 1 627 384 B1**
(45) Date of publication and mention of the grant of the patent: **19.09.2007**
(21) Application number: 04732392.8
(22) Date of filing: 12.05.2004
(51) Int. Cl.: G11B 19/28, G06F 3/06, G06F 5/06

(54) **METHOD FOR SETTING DATA CARRIER SPEED IN A DATA CARRIER DRIVE APPARATUS**
VERFAHREN ZUM EINSTELLEN DER DATENTRÄGER-GESCHWINDIGKEIT IN EINEM DATENTRÄGER-LAUFWERK
PROCEDE DE REGLAGE DE LA VITESSE D'UN SUPPORT DE DONNEES DANS UN APPAREIL DU TYPE UNITE DE SUPPORT DE DONNEES

(30) Priority: 19.05.2003 EP 03101414
(43) Date of publication of application: 22.02.2006
(73) Proprietor: Koninklijke Philips Electronics N.V., 5621 BA Eindhoven (NL)
(72) Inventor: LENAERTS, Ludo, A., L., NL-5656 AA Eindhoven (NL)
(74) Representative: Uittenbogaard, Frank
(86) International application number: PCT/IB2004/050663
(87) International publication number: WO 2004/102555

(56) References cited:
- EP-A- 1 363 276
- CN-A- 1 393 865
- US-A- 5 513 326
- US-A- 5 659 799
- US-A- 5 982 726
- "SPINDLE ROTATION OPTIMIZATION FOR DISK WRITE/READ OPERATION" IBM TECHNICAL DISCLOSURE BULLETIN, IBM CORP. NEW YORK, US, vol. 39, no. 6, 1 June 1996 (1996-06-01), pages 147-149, XP000678553 ISSN: 0018-8689

## Description

### FIELD OF THE INVENTION

The present invention relates in general to the art of storage devices such as optical storage discs. More particularly, the present invention relates in general to a disc drive apparatus for writing/reading information into/from an optical storage disc; hereinafter, such disc drive apparatus will also be indicated as "optical disc drive".

### BACKGROUND OF THE INVENTION

As is commonly known, an optical storage disc comprises at least one track, either in the form of a continuous spiral or in the form of multiple concentric circles, of storage space where information may be stored in the form of a data pattern. Optical discs may be read-only type, where information is recorded during manufacturing, which information can only be read by a user. The optical storage disc may also be a writeable type, where information may be stored by a user. For reading/writing information from/into the storage space of the optical storage disc, an optical disc drive comprises, on the one hand, rotating means for receiving and rotating an optical disc, and on the other hand optical means for generating an optical beam, typically a laser beam, and for scanning the storage track with said laser beam. Since the technology of optical discs in general, the way in which information can be stored in an optical disc, and the way in which optical data can be read from an optical disc, is commonly known, it is not necessary here to describe this technology in more detail.

Optical discs and disc drives have been developed according to different standards or formats, such as for instance CD standard, DVD standard, etc. In these standards, several important parameters are defined. One such important parameter is the nominal linear speed with which the laser beam should scan the track; this nominal linear speed will be indicated hereinafter as V_{1X}. For instance, in the case of CD, V_{1X,CD} is approximately 1.3 m/s; in the case of DVD, V_{1X,DVD} is approximately 3.5 m/s.

One development of disc drives is a capability of playing (i.e. reading or writing) discs at a speed higher than the nominal linear speed. In this respect, a disc drive may operate in constant linear velocity (CLV) mode, in which case the speed can be expressed as NX, wherein N represents the ratio between current linear track speed and nominal linear speed (e.g.: 4X, 8X, 10X, etc). On the other hand, a disc drive may also operate in constant angular velocity (CAV) mode, in which case the rotational speed f_{DISC} of the disc is kept constant. For a disc controller, CAV mode is easier to control than CLV mode. It should be clear that, in CAV mode, the linear track speed can change over a factor of about 2.5 when going from inner track to outer track.

An increase of speed (be it rotational speed or linear speed) provides an increase in the data rate, i.e. the rate of data bits written to or read from disc. Usually, such increase is considered advantageous, and it is usually assumed that a user is always interested in operating at the highest data rate possible because such would give the highest performance. Therefore, disc drives typically have an operation characteristic involving, after an initiation and start up phase, a speed-up to the highest possible rotational speed as quickly as possible.

However, high disc speeds also involve some disadvantages. For instance, high disc speeds involve higher wear and tear, and a higher noise level. Also, operation at higher disc speeds involves higher power consumption and associated higher power dissipation, and possibly an associated rise of temperature.

Therefore, one general objective of the present invention is to drive a disc at an optimal speed, which is not necessarily the highest speed which the disc drive is capable to achieve. In the context of the present invention, an optimal speed is defined as the lowest or minimum speed which still provides a required data rate.

In this context, the rate of data transfer between disc and disc drive is not the only factor to consider. Typically, the disc drive is part of a data processing system, involving a host apparatus such as for instance a host computer which may run a computer program or application. Therefore, a second important factor to consider is the rate of data transfer between disc drive and host. It is not necessary for the disc to be rotated at a speed which provides a data rate higher than the data rate required (in the case of a read operation) or provided (in the case of a write operation) by the host. On the other hand, the disc speed may not become so low that the data rate required (in the case of a read operation) or provided (in the case of a write operation) by the host is not handled properly by the disc drive.

US-5.659.799 describes a method for setting a CD-ROM speed in relation to a system performance parameter. The CD-ROM disc drive has a data buffer, for temporarily storing data read from disc. Data to be transferred to the host are taken out of the buffer. Thus, there is no direct data transfer from disc to host, but there is data transfer from disc to buffer and there is data transfer from buffer to host. If the buffer-to-host data transfer rate is lower than the disc-to-buffer data transfer rate, the amount of data in the buffer increases; if the amount of data in the buffer exceeds a first threshold, the disc rotation speed is reduced. On the other hand, if the buffer-to-host data transfer rate is higher than the disc-to-buffer data transfer rate, the amount of data in the buffer decreases; if the amount of data in the buffer is below a second threshold, the disc rotation speed is increased.

A problem with this known method is that it does not function satisfactorily in all circumstances, i.e. it is not robust. The buffer contents level is only momentary information, which may change the next moment. If the system would react directly to such changes, the behaviour of the system would be very restless, which would be annoying to the user. Also, frequently changing the disc speeds involves additional power consumption. Therefore, the system of said document needs to have a hysteresis implemented by the fact that the second threshold needs to be substantially lower than the first threshold.

Further, the system of said document has a damping factor implemented, effectively achieving the result that increase of the disc speed is done relatively late whereas decrease of the disc speed is done relatively early. Thus, this system has a characteristic favouring low speeds in relation to high speeds. This may result in an oscillating behaviour, specifically if, in the case of streaming read, the transfer rate from buffer to host has a value in between two standard values of the transfer rate from disc to buffer.

Further, the damping factor as proposed by said publication is based on the number of host requests (i.e. read commands). Thus, the actual delay depends on the combination of application and host. For instance, in a case where many read commands are issued, each command for transferring only a few blocks, a different delay results as compared to a case where a few commands are issued, each command for transferring many blocks.

### SUMMARY OF THE INVENTION

It is a general objective of the present invention to provide a disc drive with improved speed-up and speed-down behaviour.

Specifically, the present invention aims to control the speed of a disc in such a way that, on the one hand, the disc is substantially rotating at an optimal speed, while on the other hand the number of speed-changes is reduced as much as possible.

According to an important aspect of the present invention, the disc speed is set on the basis of at least one operation mode parameter.

According to a further important aspect of the present invention, the disc speed is set on the basis of at least one system performance parameter. This system performance parameter preferably is a parameter which is influenced by disc speed. If performance is low, a speed which would lead to a reduction of the system performance parameter concerned is forbidden.

According to a further important aspect of the present invention, the disc speed is set in relation to the time lapsed since the previous speed change. Preferably, the minimum delay time between two speed changes in opposite direction is larger than the minimum delay time between two successive speed changes in the same direction. Due to the fact that the minimum delay time between two successive speed changes in the same direction is relatively short, for instance in the order of 1 sec, the disc speed is brought to a certain required speed relatively quickly. Due to the fact that the minimum delay time between two speed changes in opposite direction is relatively large, for instance in the order of 30 sec, the overall number of speed-change steps is reduced, and an undesirable oscillating behaviour is effectively prevented.

According to a further important aspect of the present invention, the decision to change the disc speed is based on a comparison between the current value of the average host/drive transfer rate and the disc/drive transfer rate. In case an increase of the speed is contemplated, the current value of the average host/drive transfer rate is compared to the current value of the disc/drive transfer rate, to find whether the current situation of the disc/drive transfer rate warrants a speed-up: if so, the speed-up step is executed. On the other hand, in case a step down from the current speed to a lower speed value is contemplated, the current value of the average host/drive transfer rate is compared to the disc/drive transfer rate which is expected to occur at this lower speed value. Thus, effectively, a prediction is made whether the next situation warrants a speed-up: if so, it is considered that a speed-down from the current disc speed to the lower disc speed is not appropriate, and the speed-down step is not executed. Thus, the overall number of speed-change steps is reduced, and an undesirable oscillating behaviour is effectively prevented.

### BRIEF DESCRIPTION OF THE DRAWINGS

These and other aspects, features and advantages of the present invention will be further explained by the following description of a preferred embodiment of the method according to the present invention with reference to the drawings, in which same reference numerals indicate same or similar parts, and in which:
Figure 1 schematically shows a data transfer system;
Figure 2 is a flow diagram schematically illustrating a read procedure in accordance with a preferred embodiment of the present invention;
Figure 3 is a flow diagram schematically illustrating a write procedure in accordance with a preferred embodiment of the present invention;
Figure 4A and 4B are timing diagrams illustrating speed changes in accordance with a preferred embodiment of the present invention.

### DESCRIPTION OF THE INVENTION

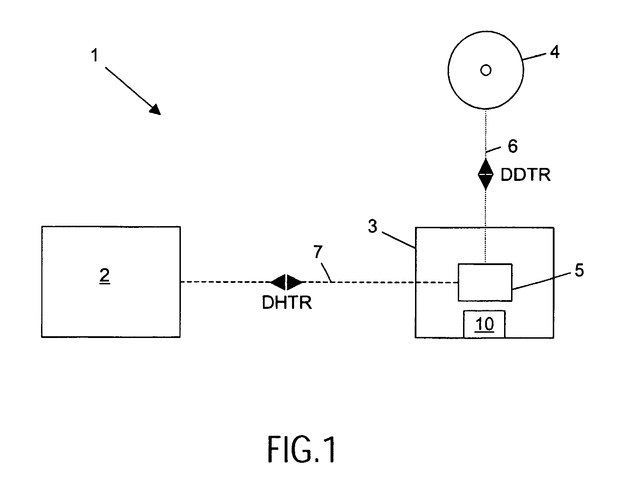

Figure 1 schematically shows a data transfer system 1, comprising a host system 2 and a disc drive apparatus 3. The host system 2 may be a programmable computer having an application running. The disc drive 3 is capable of reading data from a disc 4, for instance an optical disc, such as for instance a read-only disc like a CD-ROM, a DVD-ROM, etc, or for instance a writeable (recordable (R); rewriteable (RW)) disc having data written in it. Data received from disc 4 is stored in a buffer 5. Data transfer from disc 4 to drive 3 is indicated as disc communication link 6; the data transfer rate over this disc communication link 6 will be indicated as Disc/Drive Transfer Rate DDTR. The disc drive 3 is further capable of transferring data from its buffer 5 to the host system 2, over a host communication link 7; the data transfer rate over this host communication link 7 will be indicated as Drive/Host Transfer Rate DHTR.

In the data transfer system 1 as illustrated in figure 1, the data transfer from disc to host may occur in many typical situations, involving different data transfer rates. One typical situation is a user playing an audio disc; in such case, the Drive/Host Transfer Rate DHTR corresponds to a 1X disc speed, and it would be useless for the drive 3 to try to maintain a higher data transfer rate. Another typical example is a computer program reading a data file; in such case, the Drive/Host Transfer Rate DHTR may be higher than 1X. In another typical example, the host is running a CD-ROM game, and pieces of information must be read from disc, depending on the interaction with the user. Since the user-actions are not known in advance, it is not known in advance at which address the read operation is to take place; therefore, in order to keep the access time as low as possible, the highest Drive/Host Transfer Rate DHTR is desired. In a special case, read commands received from the host system 2 relate to subsequent addresses on disc; such case is indicated as "streaming read".

Likewise, the disc drive 3 is capable of receiving data from the host system 2, and capable of writing data to the disc 4, if the disc 4 is of a writeable type (recordable (R); rewriteable (RW)). Data received from host 2 over host communication link 7 at Drive/Host Transfer Rate DHTR is stored in buffer 5, from which the data is transferred to disc 4 over disc communication link 6 at Disc/Drive Transfer Rate DDTR.

Also in the case of writing, many typical situations may occur. For instance, when making a copy of a disc, write commands received from the host system 2 relate to subsequent addresses on disc; such case is indicated as "streaming write".

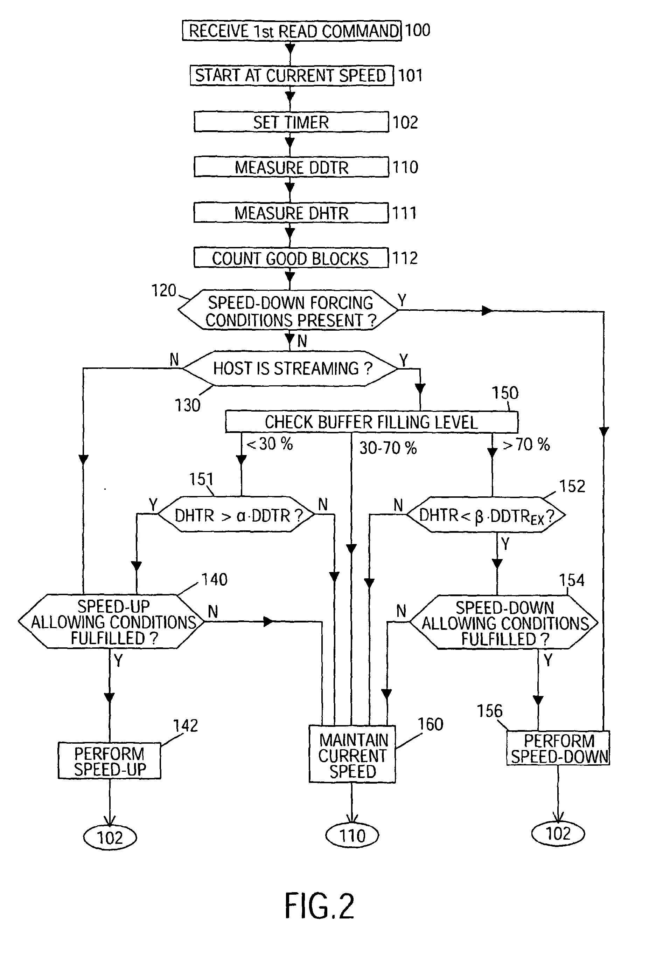

Figure 2 is a flow diagram illustrating a preferred read procedure of the disc drive 3. After receiving the first read command in step 100, a control circuit 10 of the disc drive 3 starts in step 101 with a disc reading operation at the current disc speed, e.g. a relatively low speed, for instance 1X or 40 Hz CAV. In step 102, a speed change timer is set for measuring the time lapsed since a previous speed change.

The control circuit 10 measures the disc/drive transfer rate DDTR [step 110], the drive/host transfer rate DHTR [step 111], and counts [step 112] the number of good blocks NGB, i.e. the number of blocks which are read from disc without error. It is noted that the drive/host transfer rate DHTR as measured is an average over a predetermined time period in the past.

In step 120, the control circuit 10 checks for speed-down forcing conditions, i.e. it checks whether any conditions are present which require an immediate reduction of the disc speed. If any such condition is found, the control circuit 10 performs a speed-down operation [step 156], i.e. it reduces the disc speed, unless the disc is already rotating at a minimum speed.

If no speed-down forcing conditions are found to apply, the control circuit 10 checks [step 130] whether the host 2 is operating in a streaming read mode, i.e. whether subsequent read requests relate to consecutive addresses. If this is found to be the case, the control circuit 10 will always try to set the disc speed at the lowest possible value which is capable of accommodating the DHTR [steps 150-156], otherwise the control circuit 10 will always try to set the disc speed at the highest possible value [steps 140-142].

In step 140, the control circuit 10 checks whether all speed-up allowing conditions are met. If any speed-up allowing condition is not met, the control circuit 10 maintains the current disc speed [step 160] and operation continues at step 110. If all speed-up allowing conditions are met, the control circuit 10 performs a speed-up operation [step 142], i.e. it increases the disc speed to a next speed value, and operation continues at step 102. Preferably, in increasing the disc speed, the control circuit 10 selects one speed value from a collection of predetermined disc speeds, for instance a CLV series expressed in nominal speed, such as 1X, 2X, 4X, 8X, etc., and/or a CAV series expressed in disc rotation frequency, such as 10 Hz, 20 Hz, 40 Hz, 80 Hz, 120 Hz, etc.

In step 150, the control circuit 10 checks the filling level of buffer 5. If the buffer filling level BFL is below a first predetermined low threshold, for instance 30% of the maximum buffer capacity, an increase of the disc speed is contemplated. In this consideration, the relation between DHTR and DDTR is taken into account in step 151. If the DHTR is relatively low as compared to DDTR, the control circuit 10 considers that the current disc speed is adequate and maintains the current disc speed [step 160] and operation continues at step 110. On the other hand, if the DHTR is relatively high as compared to DDTR, the control circuit 10 continues to check the speed-up allowing conditions at step 140.

By refusing to increase the disc speed if the DHTR is relatively low as compared to DDTR, the control circuit 10 effectively predicts that the low value of the buffer filling level is only temporary, and will rise in the (possibly near) future even when the current disc speed is maintained. If a speed-up would now be performed, the buffer filling level would probably rise very quickly, and a speed-down may be expected to be required shortly. Thus, a speed-up action and subsequent speed-down action are prevented. In this respect, the control circuit 10 may decide to maintain the disc speed [step 160] if DHTR is lower than DDTR, or, to be on the safe side, if DHTR is lower than α-DDTR, wherein α is a factor between 0 and 1, for instance 0.95 or 0.9, which takes measurement inaccuracies into account.

If in step 150 it appears that the buffer filling level BFL is above a second predetermined high threshold higher than the first threshold, for instance 70% of the maximum buffer capacity, a decrease of the disc speed is contemplated. In this consideration, the relation between DHTR and DDTRex is taken into account in step 152, wherein DDTRex indicates the expected DDTR after speed-down, i.e. the DDTR that is expected to result once the speed-down operation is completed. If the DHTR is relatively high as compared to DDTRex, the control circuit 10 considers that the current disc speed is adequate and maintains the current disc speed [step 160] and operation continues at step 110. On the other hand, if the DHTR is relatively low, the control circuit 10 continues to check for speed-down allowing conditions at step 154.

By refusing to decrease the disc speed if the DHTR is relatively high as compared to DDTRex, the control circuit 10 effectively predicts that, after speed-down, the buffer level will probably drop very quickly, and a speed-up may be expected to be required shortly. Thus, a speed-down action and subsequent speed-up action are prevented. In this respect, the control circuit 10 may decide to maintain the disc speed [step 160] if DHTR is higher than DDTRex, or, to be on the safe side, if DHTR is higher than β·DDTRex, wherein β is a factor between 0 and 1, for instance 0.95 or 0.9. β may be equal to α, but this is not necessary.

In step 154, the control circuit 10 checks whether all speed-down allowing conditions are met. If any speed-down allowing condition is not met, the control circuit 10 maintains the current disc speed [step 160] and operation continues at step 110. If all speed-down allowing conditions are met, the control circuit 10 performs a speed-down operation [step 156], i.e. it decreases the disc speed to a next speed value, and operation continues at step 102. Preferably, in decreasing the disc speed, the control circuit 10 selects one speed value from a collection of predetermined disc speeds, as explained above in relation to increasing the disc speed.

If in step 150 it appears that the buffer filling level BFL is between the first and second predetermined thresholds, the control circuit 10 considers that the current disc speed is adequate and maintains the current disc speed [step 160] and operation continues at step 110.

Speed-down forcing conditions are conditions which, if present, force the control circuit 10 to immediately speed-down the disc motor 4. For instance, when a temperature is above a certain level, or when mechanical vibrations are above a certain level, such may be considered as speed-down forcing conditions. Also, when a block read error occurs such may be considered as a speed-down forcing condition. It will be clear that each of such condition indicates that something may be wrong, so that the speed of the disc motor should be reduced if even one of such conditions is found to be present. It is possible that speed reduction is done stepwise, but it is also possible that speed is reduced to the lowest possible value, for instance 1X or 40 Hz. It is also possible that speed is reduced to a certain value above the lowest possible value, in order to profit from the cooling effect of the rotating disc.

Speed-down allowing conditions are conditions which must all be met for a speed-down to be allowable. In a preferred embodiment, the following speed-down allowing conditions are considered at least:
a) the current speed is higher than the minimum disc speed;
b) the time which has lapsed since the previous speed-down must be more than a certain minimum time, for instance 1 sec;
c) the time which has lapsed since the previous speed-up must be more than a certain minimum time, for instance 30 sec.

Speed-up allowing conditions are conditions which must all be met for a speed-up to be allowable. In a preferred embodiment, the following speed-up allowing conditions are considered at least:
a) the current speed is lower than the maximum disc speed;
b) the number of blocks NGB which have previously been read without error must be more than a certain minimum count, for instance NGB > 1000;
c) the time which has lapsed since the previous speed-up must be more than a certain minimum time, for instance 1 sec;
d) the time which has lapsed since the previous speed-down must be more than a certain minimum time, for instance 30 sec.

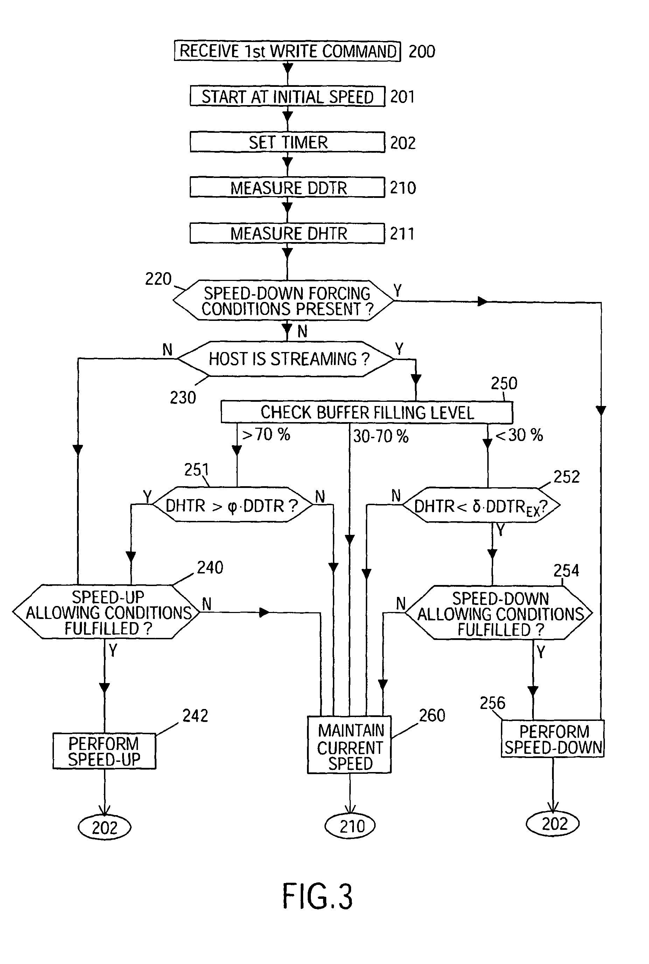

In the above, the invention has been explained for a read operation. However, the invention is not restricted to read, but is also applicable to write, as will be explained with reference to figure 3.

Figure 3 is a flow diagram illustrating a preferred write procedure of the disc drive 3. After receiving the first write command in step 200, the control circuit 10 of the disc drive 3 starts in step 201 with a disc writing operation at an initial speed. In step 202, a speed change timer is set for measuring the time lapsed since a previous speed change.

The control circuit 10 measures the disc/drive transfer rate DDTR [step 210] and the drive/host transfer rate DHTR [step 211]. It is noted that the drive/host transfer rate DHTR as measured is an average over a predetermined time period in the past.

In step 220, the control circuit 10 checks for speed-down forcing conditions, i.e. it checks whether any conditions are present which require an immediate reduction of the disc speed. If any such condition is found, the control circuit 10 performs a speed-down operation [step 256], i.e. it reduces the disc speed, unless the disc is already rotating at a minimum speed.

If no speed-down forcing conditions are found to apply, the control circuit 10 checks [step 230] whether the host 2 is operating in a streaming write mode, i.e. whether subsequent write requests relate to consecutive addresses. If this is found to be the case, the control circuit 10 will always try to set the disc speed at the lowest possible value which is capable of accommodating the DHTR [steps 250-256], otherwise the control circuit 10 will always try to set the disc speed at the highest possible value [steps 240-242].

In step 240, the control circuit 10 checks whether all speed-up allowing conditions are met. If any speed-up allowing condition is not met, the control circuit 10 maintains the current disc speed [step 260] and operation continues at step 210. If all speed-up allowing conditions are met, the control circuit 10 performs a speed-up operation [step 242], i.e. it increases the disc speed to a next speed value, and operation continues at step 202. Preferably, in increasing the disc speed, the control circuit 10 selects one speed value from a collection of predetermined disc speeds, for instance a CLV series expressed in nominal speed, such as 1X, 2X, 4X, 8X, etc., and/or a CAV series expressed in disc rotation frequency, such as 10 Hz, 20 Hz, 40 Hz, 80 Hz, 120 Hz, etc.

In step 250, the control circuit 10 checks the filling level of buffer 5. If the buffer filling level BFL is below a first predetermined low threshold, for instance 30% of the maximum buffer capacity, a decrease of the disc speed is contemplated. In this consideration, the relation between DHTR and DDTRex is taken into account in step 252. If the DHTR is relatively high as compared to DDTRex, the control circuit 10 considers that the current disc speed is adequate and maintains the current disc speed [step 260] and operation continues at step 210. On the other hand, if the DHTR is relatively low, the control circuit 10 continues to check the speed-down allowing conditions at step 254.

By refusing to decrease the disc speed if the DHTR is relatively high as compared to DDTRex, the control circuit 10 effectively predicts that, after speed-down, the buffer level will probably rise very quickly, and a speed-up may be expected to be required shortly. Thus, a speed-down action and subsequent speed-up action are prevented. In this respect, the control circuit 10 may decide to maintain the disc speed [step 260] if DHTR is higher than DDTRex, or, to be on the safe side, if DHTR is higher than δ·DDTRex, wherein δ is a factor between 0 and 1, for instance 0.95 or 0.9.

If in step 250 it appears that the buffer filling level BFL is above a second predermined high threshold higher than the first threshold, for instance 70% of the maximum buffer capacity, an increase of the disc speed is contemplated. In this consideration, the relation between DHTR and DDTR is taken into account in step 251. If the DHTR is relatively low, the control circuit 10 considers that the current disc speed is adequate and maintains the current disc speed [step 260] and operation continues at step 110. On the other hand, if the DHTR is relatively high, the control circuit 10 continues to check for speed-up allowing conditions at step 240.

By refusing to increase the disc speed if the DHTR is relatively low as compared to DDTR, the control circuit 10 effectively predicts that the high value of the buffer filling level is only temporary, and will drop in the (possibly near) future even when the current disc speed is maintained. If a speed-up would now be performed, the buffer filling level would probably drop very quickly, and a speed-down may be expected to be required shortly. Thus, a speed-up action and subsequent speed-down action are prevented. In this respect, the control circuit 10 may decide to maintain the disc speed [step 260] if DHTR is lower than DDTR, or, to be on the safe side, if DHTR is lower than ϕ·DDTR, wherein ϕ is a factor between 0 and 1, for instance 0.95 or 0.9. ϕ may be equal to δ, but this is not necessary.

In step 240, the control circuit 10 checks whether all speed-up allowing conditions are met. If any speed-up allowing condition is not met, the control circuit 10 maintains the current disc speed [step 260] and operation continues at step 210. If all speed-up allowing conditions are met, the control circuit 10 performs a speed-up operation [step 242], i.e. it increases the disc speed to a next speed value, and operation continues at step 202. Preferably, in increasing the disc speed, the control circuit 10 selects one speed value from a collection of predetermined disc speeds, as explained above.

If in step 250 it appears that the buffer filling level BFL is between the first and second predetermined thresholds, the control circuit 10 considers that the current disc speed is adequate and maintains the current disc speed [step 260] and operation continues at step 210.

From the above explanations, it follows that a factor having major importance in the decision to set the disc speed at a certain value is the question whether or not the host system 2 is operating in a streaming mode (steps 130 and 230). If not, the control circuit 10 always tries to set the disc speed to the highest possible value as soon as possible. This "streaming mode" is an example of an operation mode parameter, i.e. a parameter indicating a mode of operation of the drive-host system. Due to the nature of such parameter, the value of such parameter is not likely to change often. If a change is experienced, it is expected to have a long-lasting effect. Thus, taking such operation mode parameter into account when setting the disc speed has an advantageous effect on the performance of the data transfer system 1.

Further, it follows that a factor having major importance in the decision to set the disc speed at a certain value is the question whether or not data blocks are read without errors. This "error-free operation" is an example of a system performance parameter, i.e. a parameter indicating how the system has performed in the recent past. Error-free operation is influenced by disc speed: the higher the disc speed, the higher the chance on errors. Also, drive/host transfer rate and drive/disc transfer rate are examples of system performance parameters. Taking into account these parameters when setting the disc speed has an advantageous effect on the performance of the data transfer system 1.

Further, it follows that a factor having major importance in the decision to set the disc speed at a certain value is the amount of time lapsed since the previous speed change. By taking a certain minimum time between successive changes, restless operation of the system is prevented. The waiting time between successive speed-up steps is relatively short, e.g. in the order of a few seconds; the same applies to the waiting time between successive speed-down steps. In contrast, the waiting time between successive speed changes in opposite direction is relatively long, e.g. in the order of 30 sec or even longer. This, also, has an advantageous effect on the performance of the data transfer system 1.

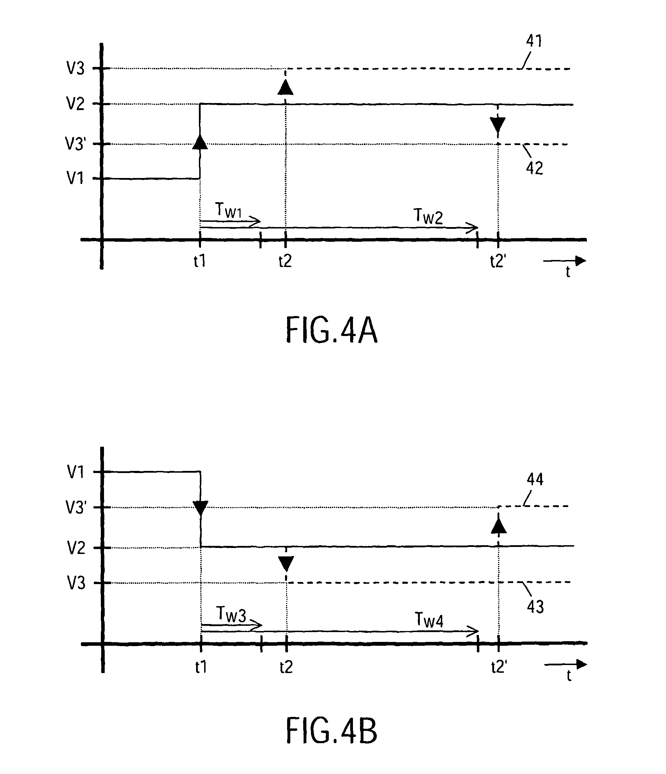

Figure 4A and 4B are timing diagrams illustrating this feature of the invention in more detail. The horizontal axis represents time, while the vertical axis represents disc speed. Figure 4A illustrates a situation where the disc 4 is initially being rotated at a certain first speed V1, until a first time t1, when the disc speed is increased to a second speed V2 higher than V1. Should a further increase of the speed be or become required, then such is prohibited until a predetermined first minimum waiting time T_{W1} has passed since the said first time t1 of the previous speed change. Line 41 illustrates the case of a second speed-up step from said second speed V2 to a third speed V3 higher than the second speed V2, at a time t2, wherein t2-t1>T_{W1}.

In contrast, should, after the speed-up step at t1, a decrease of the speed be or become required, then such is prohibited until a predetermined second minimum waiting time T_{W2} has passed since the said first time t1 of the previous speed change. Line 42 illustrates the case of a speed-down step from said second speed V2 to a third speed V3' lower than the second speed V2, at a time t2', wherein t2'-t1>T_{W2}.

In this respect it is noted that, if the further increase of the speed becomes required before said predetermined first minimum waiting time T_{W1} has passed, then no speed-up step is executed until time t1+T_{W1}. At that time, it may be that the speed-up step is executed immediately, such that t2=t1+T_{W1}, for reason that the further increase of the speed has already been required during said predetermined first minimum waiting time T_{W1}. However, it may also be that this fact is not "remembered", and that the speed-up step is only executed at the first occasion after t1+T_{W1} when control performs the step of checking the speed-up allowing conditions (for instance step 140) and finds that all speed-up allowing conditions are fulfilled, including the passing of said predetermined first minimum waiting time T_{W1}. In that case, t2 may be larger than t1+T_{W1}, as illustrated. The same principle applies, *mutatis mutandis,* to speed-down steps.

Figure 4B illustrates a situation where the disc 4 is initially being rotated at a certain first speed V1, until a first time t1, when the disc speed is decreased to a second speed V2 lower than V1. Should a further decrease of the speed be or become required, then such is prohibited until a predetermined first minimum waiting time T_{W3} has passed since the said first time t1 of the previous speed change. Line 43 illustrates the case of a second speed-down step from said second speed V2 to a third speed V3 lower than the second speed V2, at a time t2, wherein t2-t1>T_{W3}.

In contrast, should, after the speed-down step at t1, an increase of the speed be or become required, then such is prohibited until a predetermined second minimum waiting time T_{W4} has passed since the said first time t1 of the previous speed change. Line 44 illustrates the case of a speed-up step from said second speed V2 to a third speed V3' higher than the second speed V2, at a time t2', wherein t2'-t1>T_{W4}.

It is noted that T_{W1} may be equal to T_{W3}, but this is not necessary. Likewise, T_{W2} may be equal to T_{W4}, but this is not necessary.

It should be clear to a person skilled in the art that the present invention is not limited to the exemplary embodiments discussed above, but that various variations and modifications are possible within the protective scope of the invention as defined in the appending claims.

For instance, the present invention has been explained in the context of optical storage discs. However, the gist of the present invention is not restricted to optical storage discs, but is generally applicable to storage devices which comprise a movable data carrier, wherein the carrier speed is variable, and wherein a drive-to-carrier data transfer rate and/or a carrier-to-drive data transfer rate depends on the carrier speed.

Further, the step of setting the timer (steps 102; 202) may be implemented as part of the speed-up procedure (steps 142; 242) or the speed-down procedure (steps 156; 256).

In the above, the present invention has been explained by discussing method steps performed by the control circuit 10 of the disc drive 3. This means that the invention is implemented by suitable adaptation of the disc drive, for instance by suitably programming the control circuit 10 of the disc drive 3. Thus, a disc drive is one embodiment of the present invention. However, it is also possible that the method steps are performed by the host 2: typically, disc drives have a set of instructions, including instructions for setting the disc speed, and hosts are typically capable of sending to the disc drive commands including a disc speed setting instruction. Thus, a host is also an embodiment of the present invention.

In the above, the present invention has been explained for the case of a preferred embodiment, where the average drive/host transfer rate DHTR is compared to the current disc/drive transfer rate DDTR when a speed-up step is contemplated (steps 151; 251), whereas the average drive/host transfer rate DHTR is compared to the expected disc/drive transfer rate DDTRex when a speed-down step is contemplated (steps 152; 252). However, within the scope of the present invention it is also possible that the average drive/host transfer rate DHTR is compared to the expected disc/drive transfer rate DDTRex when a speed-up step is contemplated. The result of such comparison indicates whether it is to be expected that a speed-change is to be counteracted by a speed-change in the opposite direction in the near future. Likewise, it is also possible that the average drive/host transfer rate DHTR is compared to the current disc/drive transfer rate DDTR when a speed-down step is contemplated. The result of such comparison indicates whether it is to be expected that the buffer level tends to approach a middle level above the said low threshold and below the said high threshold in the near future.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, etc.

## Claims

1. Method for setting a data carrier speed in a data carrier drive apparatus (3) which is in data transfer communication (7) with a host system (2), wherein data transfer between carrier and drive apparatus takes place with a carrier/drive transfer rate (DDTR) and wherein data transfer between drive apparatus and host system takes place with a drive/host transfer rate (DHTR);
**characterized in that** the carrier/drive transfer rate (DDTR) and the drive/host transfer rate (DHTR) are taken into account when setting the carrier speed.

2. Method according to Claim 1,
- wherein a target speed different from the current speed is calculated;
- wherein the expected carrier/drive transfer rate (DDTRex) at the target speed is calculated;
- wherein the drive/host transfer rate (DHTR) is compared to the expected carrier/drive transfer rate (DDTRex);
- and wherein the current speed is maintained if said comparison between drive/host transfer rate (DHTR) and expected carrier/drive transfer rate (DDTRex) indicates that a next speed change from the said target speed back to the current speed is to be expected if the speed would be changed to the said target speed.

3. Method according to Claim 1, wherein in the case of operation in a reading mode, data read from the carrier is temporarily stored in a buffer (5) while data to be transferred to the host system (2) is taken from said buffer (5);
- wherein in the case of operation in a writing mode, data received from the host system (2) is temporarily stored in a buffer (5) while data to be written to carrier is taken from said buffer (5);
the method comprising the steps of:
- measuring the carrier/drive transfer rate (DDTR) (step 110;210);
- measuring the average drive/host transfer rate (DHTR) (step 111;211);
- checking the buffer filling level (step 150;250);
- comparing the carrier/drive transfer rate (DDTR) with the average drive/host transfer rate (DHTR);
- maintaining (step 160; 260) the current speed if the buffer filling level is relatively low while the buffer input transfer rate is relatively high as compared to the buffer output transfer rate.

4. Method according to claim 1, wherein, in the case of operation in a reading mode, data read from carrier is temporarily stored in a buffer (5) while data to be transferred to the host system (2) is taken from said buffer (5);
the method comprising the steps of:
- measuring the carrier/drive transfer rate (DDTR) (step 110);
- measuring the average drive/host transfer rate (DHTR) (step 111);
- checking the buffer filling level (step 150);
- comparing the carrier/drive transfer rate (DDTR) with the average drive/host transfer rate (DHTR) (step 151);
- maintaining (step 160) the current speed if the buffer filling level is relatively low while DHTR < α·DDTR applies,
wherein α is a predetermined factor between 0 and 1, preferably in the range between 0.8 and 0.95.

5. Method according to claim 1, wherein, in the case of operation in a reading mode, data read from carrier is temporarily stored in a buffer (5) while data to be transferred to the host system (2) is taken from said buffer (5);
the method comprising the steps of:
- measuring the carrier/drive transfer rate (DDTR) (step 110);
- calculating a target speed higher than the current speed;
- calculating the expected carrier/drive transfer rate (DDTRex) at the target speed;
- measuring the average drive/host transfer rate (DHTR) (step 111);
- checking the buffer filling level (step 150);
- comparing the expected carrier/drive transfer rate (DDTRex) with the average drive/host transfer rate (DHTR);
- maintaining (step 160) the current speed if the buffer filling level is relatively low while DHTR < α·DDTRex applies,
wherein α is a predetermined factor between 0 and 1, preferably in the range between 0.8 and 0.95.

6. Method according to claim 1, wherein, in the case of operation in a writing mode, data received from the host system (2) is temporarily stored in a buffer (5) while data to be written to carrier is taken from said buffer (5);
the method comprising the steps of:
- measuring the carrier/drive transfer rate (DDTR) (step 210);
- measuring the average drive/host transfer rate (DHTR) (step 211);
- checking the buffer filling level (step 250);
- comparing the carrier/drive transfer rate (DDTR) with the average drive/host transfer rate (DHTR);
- maintaining (step 260) the current speed if the buffer filling level is relatively low while DHTR > δ·DDTR applies,
wherein δ is a predetermined factor between 0 and 1, preferably in the range between 0.8 and 0.95.

7. Method according to claim 1, wherein, in the case of operation in a writing mode, data received from the host system (2) is temporarily stored in a buffer (5) while data to be written to carrier is taken from said buffer (5);
the method comprising the steps of:
- measuring the carrier/drive transfer rate (DDTR) (step 210);
- calculating a target speed lower than the current speed;
- calculating the expected carrier/drive transfer rate (DDTRex) at the target speed;
- measuring the average drive/host transfer rate (DHTR) (step 211);
- checking the buffer filling level (step 250);
- comparing the average drive/host transfer rate (DHTR) with the expected carrier/drive transfer rate (DDTRex) (step 252);
- maintaining (step 260) the current speed if the buffer filling level is relatively low while DHTR > δ·DDTRex applies,
wherein δ is a predetermined factor between 0 and 1, preferably in the range between 0.8 and 0.95.

8. Method according to claim 1, wherein, in the case of operation in a reading mode, data read from carrier is temporarily stored in a buffer (5) while data to be transferred to the host system (2) is taken from said buffer (5);
wherein, in the case of operation in a writing mode, data received from the host system (2) is temporarily stored in a buffer (5) while data to be written to carrier is taken from said buffer (5);
the method comprising the steps of:
- measuring the carrier/drive transfer rate (DDTR) (step 110; 210);
- measuring the average drive/host transfer rate (DHTR) (step 111; 211);
- checking the buffer filling level (step 150; 250);
- comparing the carrier/drive transfer rate (DDTR) with the average drive/host transfer rate (DHTR);
- maintaining (step 160; 260) the current speed if the buffer filling level is relatively high while the buffer input transfer rate is relatively low as compared to the buffer output transfer rate.

9. Method according to claim 1, wherein, in the case of operation in a writing mode, data received from the host system (2) is temporarily stored in a buffer (5) while data to be written to carrier is taken from said buffer (5);
the method comprising the steps of:
- measuring the carrier/drive transfer rate (DDTR) (step 210);
- measuring the average drive/host transfer rate (DHTR) (step 211);
- checking the buffer filling level (step 250);
- comparing the carrier/drive transfer rate (DDTR) with the average drive/host transfer rate (DHTR) (step 251);
- maintaining (step 260) the current speed if the buffer filling level is relatively high while DHTR < ϕ·DDTR applies,
wherein ϕ is a predetermined factor between 0 and 1, preferably in the range between 0.8 and 0.95.

10. Method according to claim 1, wherein, in the case of operation in a writing mode, data received from the host system (2) is temporarily stored in a buffer (5) while data to be written to carrier is taken from said buffer (5);
the method comprising the steps of:
- measuring the carrier/drive transfer rate (DDTR) (step 210);
- calculating a target speed higher than the current speed;
- calculating the expected carrier/drive transfer rate (DDTRex) at the target speed;
- measuring the average drive/host transfer rate (DHTR) (step 211);
- checking the buffer filling level (step 250);
- comparing the expected carrier/drive transfer rate (DDTRex) with the average drive/host transfer rate (DHTR) (step 251);
- maintaining (step 260) the current speed if the buffer filling level is relatively high while DHTR < ϕ·DDTRex applies,
wherein ϕ is a predetermined factor between 0 and 1, preferably in the range between 0.8 and 0.95.

11. Method according to claim 1, wherein, in the case of operation in a reading mode, data read from carrier is temporarily stored in a buffer (5) while data to be transferred to the host system (2) is taken from said buffer (5);
the method comprising the steps of:
- measuring the carrier/drive transfer rate (DDTR) (step 110);
- measuring the average drive/host transfer rate (DHTR) (step 111);
- checking the buffer filling level (step 150);
- comparing the carrier/drive transfer rate (DDTR) with the average drive/host transfer rate (DHTR);
- maintaining (step 160) the current speed if the buffer filling level is relatively high while DHTR > β·DDTR applies,
wherein β is a predetermined factor between 0 and 1, preferably in the range between 0.8 and 0.95.

12. Method according to claim 1, wherein, in the case of operation in a reading mode, data read from carrier is temporarily stored in a buffer (5) while data to be transferred to the host system (2) is taken from said buffer (5);
the method comprising the steps of:
- measuring the carrier/drive transfer rate (DDTR) (step 110);
- calculating a target speed lower than the current speed;
- calculating the expected carrier/drive transfer rate (DDTRex) at the target speed;
- measuring the average drive/host transfer rate (DHTR) (step 111);
- checking the buffer filling level (step 150);
- comparing the average drive/host transfer rate (DHTR) with the expected carrier/drive transfer rate (DDTRex) (step 152);
- maintaining (step 160) the current speed if the buffer filling level is relatively high while DHTR > β·DDTRex applies,
wherein β is a predetermined factor between 0 and 1, preferably in the range between 0.8 and 0.95.

13. Method according to claim 1, wherein, in the case of operation in a reading mode, data read from carrier is temporarily stored in a buffer (5) while data to be transferred to the host system (2) is taken from said buffer (5);
wherein, if the host system (2) is operating in a streaming read mode, the carrier speed is increased if:
the buffer (5) filling level is below a first relatively low threshold;
and DHTR > α·DDTR, wherein α is a factor between 0 and 1, preferably between 0.8 and 0.95;
and the current speed is lower than the maximum carrier speed;
and the number of blocks (NGB) which have previously been read without error is more than a certain minimum amount;
and the time which has lapsed since the previous speed-up step is more than a certain first minimum waiting time;
and the time which has lapsed since the previous speed-down step is more than a certain second minimum waiting time, this second minimum waiting time preferably having a duration longer than the duration of said first minimum waiting time.

14. Method according to claim 1, wherein, in the case of operation in a reading mode, data read from carrier is temporarily stored in a buffer (5) while data to be transferred to the host system (2) is taken from said buffer (5);
wherein, if the host system (2) is operating in a streaming read mode, the carrier speed is decreased if:
the buffer (5) filling level is above a second relatively high threshold;
and DHTR < β·DDTRex, wherein β is a factor between 0 and 1, preferably between 0.8 and 0.95, and wherein DDTRex is the expected carrier/drive transfer rate at the carrier speed achieved by the speed-down step;
and the current speed is higher than the minimum carrier speed;
and the time which has lapsed since the previous speed-down step is more than a certain first minimum waiting time;
and the time which has lapsed since the previous speed-up step is more than a certain second minimum waiting time, this second minimum waiting time preferably having a duration longer than the duration of said first minimum waiting time.

15. Method according to claim 1, wherein, in the case of operation in a writing mode, data received from the host system (2) is temporarily stored in a buffer (5) while data to be written to carrier is taken from said buffer (5);
wherein, if the host system (2) is operating in a streaming write mode, the carrier speed is increased if:
the buffer (5) filling level is above a first relatively high threshold;
and DHTR < ϕ·DDTR, wherein ϕ is a factor between 0 and 1, preferably between 0.8 and 0.95;
and the current speed is lower than the maximum carrier speed;
and the time which has lapsed since the previous speed-up step is more than a certain first minimum waiting time;
and the time which has lapsed since the previous speed-down step is more than a certain second minimum waiting time, this second minimum waiting time preferably having a duration longer than the duration of said first minimum waiting time.

16. Method according to claim 1, wherein, in the case of operation in a writing mode, data received from the host system (2) is temporarily stored in a buffer (5) while data to be written to carrier is taken from said buffer (5);
wherein, if the host system (2) is operating in a streaming write mode, the carrier speed is decreased if:
the buffer (5) filling level is below a second relatively low threshold;
and DHTR < δ·DDTRex, wherein δ is a factor between 0 and 1, preferably between 0.8 and 0.95, and wherein DDTRex is the expected carrier/drive transfer rate at the carrier speed achieved by the speed-down step;
and the current speed is higher than the minimum carrier speed;
and the time which has lapsed since the previous speed-down step is more than a certain first minimum waiting time;
and the time which has lapsed since the previous speed-up step is more than a certain second minimum waiting time, this second minimum waiting time preferably having a duration longer than the duration of said first minimum waiting time.

17. Method according to claim 1, wherein, in the case of operation in a reading mode, data read from carrier is temporarily stored in a buffer (5) while data to be transferred to the host system (2) is taken from said buffer (5);
the method comprising the steps of:
- measuring the carrier/drive transfer rate (DDTR) (step 110);
- measuring the average drive/host transfer rate (DHTR) (step 111);
- calculating a target speed lower than the current speed;
- calculating the expected carrier/drive transfer rate (DDTRex) at the target speed;
- checking the buffer filling level (step 150);
* if the buffer filling level is relatively low:
comparing the average drive/host transfer rate (DHTR) with the current carrier/drive transfer rate (DDTR) (step 151) and deciding to maintain (step 160) the current speed if DHTR < α·DDTR applies;
* if the buffer filling level is relatively high:
comparing the average drive/host transfer rate (DHTR) with the expected carrier/drive transfer rate (DDTRex) (step 152) and deciding to maintain (step 160) the current speed if DHTR > β·DDTReX applies;
wherein α is a predetermined factor between 0 and 1, preferably in the range between 0.8 and 0.95;
and wherein β is a predetermined factor between 0 and 1, preferably in the range between 0.8 and 0.95.

18. Method according to claim 1, wherein, in the case of operation in a writing mode, data received from the host system (2) is temporarily stored in a buffer (5) while data to be written to carrier is taken from said buffer (5);
the method comprising the steps of:
- measuring the carrier/drive transfer rate (DDTR) (step 210);
- measuring the average drive/host transfer rate (DHTR) (step 211);
- calculating a target speed lower than the current speed;
- calculating the expected carrier/drive transfer rate (DDTRex) at the target speed;
- checking the buffer filling level (step 250);
* if the buffer filling level is relatively high:
comparing the average drive/host transfer rate (DHTR) with the current carrier/drive transfer rate (DDTR) (step 251) and deciding to maintain (step 260) the current speed if DHTR < ϕ·DDTR applies;
* if the buffer filling level is relatively low:
comparing the average drive/host transfer rate (DHTR) with the expected carrier/drive transfer rate (DDTRex) (step 252) and deciding to maintain (step 260) the current speed if DHTR > δ·DDTRex applies;
wherein ϕ is a predetermined factor between 0 and 1, preferably in the range between 0.8 and 0.95;
and wherein δ is a predetermined factor between 0 and 1, preferably in the range between 0.8 and 0.95.

19. Method according to any of the previous claims, wherein the carrier is a disc, for instance an optical disc or a hard disc.

20. Carrier drive apparatus (3) for writing/reading information into/from a data carrier (4), the apparatus being adapted to perform the method according to any of the previous claims.

21. Data transfer system (1), comprising a host system (2) and a carrier drive apparatus (3) according to claim 20, the host system (2) and the carrier drive apparatus (3) being in data transfer communication (7) with each other.

22. Host system (2), capable of communicating with a carrier drive apparatus (3) for writing/reading information into/from a data carrier (4), the carrier drive apparatus (3) being of a type which is responsive to speed setting instructions to increase or decrease a carrier speed;
the host system being capable of sending speed setting instructions to the carrier drive apparatus (3);
wherein the host system is adapted to perform the method according to any of the previous claims 1-19.

23. Data transfer system (1), comprising a host system (2) according to claim 22 and a carrier drive apparatus (3) for writing/reading information into/from a data carrier (4), the carrier drive apparatus (3) being of a type which is responsive to speed setting instructions to increase or decrease a carrier speed;
the host system (2) and the carrier drive apparatus (3) being in data transfer communication (7) with each other.

## Patentansprüche

1. Verfahren zum Einstellen einer Datenträgergeschwindigkeit in einem Datenträger-Laufwerk (3), welches über eine Datenübertragungsverbindung (7) mit einem Hostsystem (2) kommuniziert, wobei die Datenübertragung zwischen Träger und Laufwerk mit einer Übertragungsgeschwindigkeit Träger/Laufwerk (DDTR) stattfindet und wobei die Datenübertragung zwischen Laufwerk und Hostsystem mit einer Übertragungsgeschwindigkeit Laufwerk/Host (DHTR) stattfindet;
**dadurch gekennzeichnet, dass** die Übertragungsgeschwindigkeit Träger/Laufwerk (DDTR) und die Übertragungsgeschwindigkeit Laufwerk/Host (DHTR) beim Einstellen der Trägergeschwindigkeit berücksichtigt werden.

2. Verfahren nach Anspruch 1,
- wobei eine Zielgeschwindigkeit berechnet wird, die von der aktuellen Geschwindigkeit verschieden ist;
- wobei die erwartete Übertragungsgeschwindigkeit Träger/Laufwerk (DDTRex) bei der Zielgeschwindigkeit berechnet wird;
- wobei die die Übertragungsgeschwindigkeit Laufwerk/Host (DHTR) mit der erwarteten Übertragungsgeschwindigkeit Träger/Laufwerk (DDTRex) verglichen wird;
- und wobei die aktuelle Geschwindigkeit beibehalten wird, wenn der Vergleich zwischen der Übertragungsgeschwindigkeit Laufwerk/Host (DHTR) und der erwarteten Übertragungsgeschwindigkeit Träger/Laufwerk (DDTRex) darauf hindeutet, dass eine nächste Geschwindigkeitsänderung von der Zielgeschwindigkeit zurück zur aktuellen Geschwindigkeit zu erwarten wäre, wenn die Geschwindigkeit in die Zielgeschwindigkeit geändert würde.

3. Verfahren nach Anspruch 1, wobei im Falle eines Betriebs in einer Lese-Betriebsart Daten, die von dem Träger gelesen wurden, zeitweilig in einem Puffer (5) gespeichert werden, während Daten, die zu dem Hostsystem (2) übertragen werden sollen, aus dem Puffer (5) entnommen werden;
- wobei im Falle eines Betriebs in einer Schreib-Betriebsart Daten, die von dem Hostsystem (2) empfangen wurden, zeitweilig in einem Puffer (5) gespeichert werden, während Daten, die auf den Träger geschrieben werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 110; 210);
- Messen der mittleren Übertragungsgeschwindigkeit Laufwerk/Host (DHTR) (Schritt 111; 211);
- Prüfen des Pufferfüllstandes (Schritt 150; 250);
- Vergleichen der Übertragungsgeschwindigkeit Träger/Laufwerk (DDTR) mit der mittleren Übertragungsgeschwindigkeit Laufwerk/Host (DHTR);
- Beibehalten (Schritt 160; 260) der aktuellen Geschwindigkeit, wenn der Pufferfüllstand relativ niedrig ist, während die Übertragungsgeschwindigkeit am Puffereingang relativ hoch im Vergleich zur Übertragungsgeschwindigkeit am Pufferausgang ist.

4. Verfahren nach Anspruch 1, wobei im Falle eines Betriebs in einer Lese-Betriebsart Daten, die von dem Träger gelesen wurden, zeitweilig in einem Puffer (5) gespeichert werden, während Daten, die zu dem Hostsystem (2) übertragen werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 110);
- Messen der mittleren Übertragungsgeschwindigkeit Laufwerk/Host (DHTR) (Schritt 111);
- Prüfen des Pufferfüllstandes (Schritt 150);
- Vergleichen der Übertragungsgeschwindigkeit Träger/Laufwerk (DDTR) mit der mittleren Übertragungsgeschwindigkeit Laufwerk/Host (DHTR) (Schritt 151);
- Beibehalten (Schritt 160) der aktuellen Geschwindigkeit, wenn der Pufferfüllstand relativ niedrig ist, während DHTR < α·DDTR gilt,
wobei α ein vorgegebener Faktor zwischen 0 und 1 ist, vorzugsweise im Bereich zwischen 0,8 und 0,95.

5. Verfahren nach Anspruch 1, wobei im Falle eines Betriebs in einer Lese-Betriebsart Daten, die von dem Träger gelesen wurden, zeitweilig in einem Puffer (5) gespeichert werden, während Daten, die zu dem Hostsystem (2) übertragen werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 110);
- Berechnen einer Zielgeschwindigkeit, die höher als die aktuelle Geschwindigkeit ist;
- Berechnen der erwarteten Übertragungsgeschwindigkeit Träger/Laufwerk (DDTRex) bei der Zielgeschwindigkeit;
- Messen der mittleren Übertragungsgeschwindigkeit Laufwerk/Host (DHTR) (Schritt 111);
- Prüfen des Pufferfüllstandes (Schritt 150);
- Vergleichen der erwarteten Übertragungsgeschwindigkeit Träger/Laufwerk (DDTRex) mit der mittleren Übertragungsgeschwindigkeit Laufwerk/Host (DHTR);
- Beibehalten (Schritt 160) der aktuellen Geschwindigkeit, wenn der Pufferfüllstand relativ niedrig ist, während DHTR < α·DDTRex gilt,
wobei α ein vorgegebener Faktor zwischen 0 und 1 ist, vorzugsweise im Bereich zwischen 0,8 und 0,95.

6. Verfahren nach Anspruch 1, wobei im Falle eines Betriebs in einer Schreib-Betriebsart Daten, die von dem Hostsystem (2) empfangen wurden, zeitweilig in einem Puffer (5) gespeichert werden, während Daten, die auf den Träger geschrieben werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 210);
- Messen der mittleren Übertragungsgeschwindigkeit Laufwerk/Host (DHTR) (Schritt 211);
- Prüfen des Pufferfüllstandes (Schritt 250);
- Vergleichen der Übertragungsgeschwindigkeit Träger/Laufwerk (DDTR) mit der mittleren Übertragungsgeschwindigkeit Laufwerk/Host (DHTR);
- Beibehalten (Schritt 260) der aktuellen Geschwindigkeit, wenn der Pufferfüllstand relativ niedrig ist, während DHTR > δ·DDTR gilt,
wobei δ ein vorgegebener Faktor zwischen 0 und 1 ist, vorzugsweise im Bereich zwischen 0,8 und 0,95.

7. Verfahren nach Anspruch 1, wobei im Falle eines Betriebs in einer Schreib-Betriebsart Daten, die von dem Hostsystem (2) empfangen wurden, zeitweilig in einem Puffer (5) gespeichert werden, während Daten, die auf den Träger geschrieben werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 210);
- Berechnen einer Zielgeschwindigkeit, die niedriger als die aktuelle Geschwindigkeit ist;
- Berechnen der erwarteten Übertragungsgeschwindigkeit Träger/Laufwerk (DDTRex) bei der Zielgeschwindigkeit;
- Messen der mittleren Übertragungsgeschwindigkeit Laufwerk/Host (DHTR) (Schritt 211);
- Prüfen des Pufferfüllstandes (Schritt 250);
- Vergleichen der mittleren Übertragungsgeschwindigkeit Laufwerk/Host (DHTR) mit der erwarteten Übertragungsgeschwindigkeit Träger/Laufwerk (DDTRex) (Schritt 252);
- Beibehalten (Schritt 260) der aktuellen Geschwindigkeit, wenn der Pufferfüllstand relativ niedrig ist, während DHTR > δ·DDTRex gilt,
wobei δ ein vorgegebener Faktor zwischen 0 und 1 ist, vorzugsweise im Bereich zwischen 0,8 und 0,95.

8. Verfahren nach Anspruch 1, wobei im Falle eines Betriebs in einer Lese-Betriebsart Daten, die von dem Träger gelesen wurden, zeitweilig in einem Puffer (5) gespeichert werden, während Daten, die zu dem Hostsystem (2) übertragen werden sollen, aus dem Puffer (5) entnommen werden;
- wobei im Falle eines Betriebs in einer Schreib-Betriebsart Daten, die von dem Hostsystem (2) empfangen wurden, zeitweilig in einem Puffer (5) gespeichert werden, während Daten, die auf den Träger geschrieben werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 110; 210);
- Messen der mittleren Übertragungsgeschwindigkeit Laufwerk/Host (DHTR) (Schritt 111; 211);
- Prüfen des Pufferfüllstandes (Schritt 150; 250);
- Vergleichen der Übertragungsgeschwindigkeit Träger/Laufwerk (DDTR) mit der mittleren Übertragungsgeschwindigkeit Laufwerk/Host (DHTR);
- Beibehalten (Schritt 160; 260) der aktuellen Geschwindigkeit, wenn der Pufferfüllstand relativ hoch ist, während die Übertragungsgeschwindigkeit am Puffereingang relativ niedrig im Vergleich zur Übertragungsgeschwindigkeit am Pufferausgang ist.

9. Verfahren nach Anspruch 1, wobei im Falle eines Betriebs in einer Schreib-Betriebsart Daten, die von dem Hostsystem (2) empfangen wurden, zeitweilig in einem Puffer (5) gespeichert werden, während Daten, die auf den Träger geschrieben werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 210);
- Messen der mittleren Übertragungsgeschwindigkeit Laufwerk/Host (DHTR) (Schritt 211);
- Prüfen des Pufferfüllstandes (Schritt 250);
- Vergleichen der Übertragungsgeschwindigkeit Träger/Laufwerk (DDTR) mit der mittleren Übertragungsgeschwindigkeit Laufwerk/Host (DHTR) (Schritt 251);
- Beibehalten (Schritt 260) der aktuellen Geschwindigkeit, wenn der Pufferfüllstand relativ hoch ist, während DHTR < ϕ·DDTR gilt,
wobei ϕ ein vorgegebener Faktor zwischen 0 und 1 ist, vorzugsweise im Bereich zwischen 0,8 und 0,95.

10. Verfahren nach Anspruch 1, wobei im Falle eines Betriebs in einer Schreib-Betriebsart Daten, die von dem Hostsystem (2) empfangen wurden, zeitweilig in einem Puffer (5) gespeichert werden, während Daten, die auf den Träger geschrieben werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 210);
- Berechnen einer Zielgeschwindigkeit, die höher als die aktuelle Geschwindigkeit ist;
- Berechnen der erwarteten Übertragungsgeschwindigkeit Träger/Laufwerk (DDTRex) bei der Zielgeschwindigkeit;
- Messen der mittleren Übertragungsgeschwindigkeit Laufwerk/Host (DHTR) (Schritt 211);
- Prüfen des Pufferfüllstandes (Schritt 250);
- Vergleichen der erwarteten Übertragungsgeschwindigkeit Träger/Laufwerk (DDTRex) mit der mittleren Übertragungsgeschwindigkeit Laufwerk/Host (DHTR) (Schritt 251);
- Beibehalten (Schritt 260) der aktuellen Geschwindigkeit, wenn der Pufferfüllstand relativ hoch ist, während DHTR < ϕ·DDTRex gilt,
wobei ϕ ein vorgegebener Faktor zwischen 0 und 1 ist, vorzugsweise im Bereich zwischen 0,8 und 0,95.

11. Verfahren nach Anspruch 1, wobei im Falle eines Betriebs in einer Lese-Betriebsart Daten, die von dem Träger gelesen wurden, zeitweilig in einem Puffer (5) gespeichert werden, während Daten, die zu dem Hostsystem (2) übertragen werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 110);
- Messen der mittleren Übertragungsgeschwindigkeit Laufwerk/Host (DHTR) (Schritt 111);
- Prüfen des Pufferfüllstandes (Schritt 150);
- Vergleichen der Übertragungsgeschwindigkeit Träger/Laufwerk (DDTR) mit der mittleren Übertragungsgeschwindigkeit Laufwerk/Host (DHTR);
- Beibehalten (Schritt 160) der aktuellen Geschwindigkeit, wenn der Pufferfüllstand relativ hoch ist, während DHTR > β·DDTR gilt,
wobei β ein vorgegebener Faktor zwischen 0 und 1 ist, vorzugsweise im Bereich zwischen 0,8 und 0,95.

12. Verfahren nach Anspruch 1, wobei im Falle eines Betriebs in einer Lese-Betriebsart Daten, die von dem Träger gelesen wurden, zeitweilig in einem Puffer (5) gespeichert werden, während Daten, die zu dem Hostsystem (2) übertragen werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 110);
- Berechnen einer Zielgeschwindigkeit, die niedriger als die aktuelle Geschwindigkeit ist;
- Berechnen der erwarteten Übertragungsgeschwindigkeit Träger/Laufwerk (DDTRex) bei der Zielgeschwindigkeit;
- Messen der mittleren Übertragungsgeschwindigkeit Laufwerk/Host (DHTR) (Schritt 111);
- Prüfen des Pufferfüllstandes (Schritt 150);
- Vergleichen der mittleren Übertragungsgeschwindigkeit Laufwerk/Host (DHTR) mit der erwarteten Übertragungsgeschwindigkeit Träger/Laufwerk (DDTRex) (Schritt 152);
- Beibehalten (Schritt 160) der aktuellen Geschwindigkeit, wenn der Pufferfüllstand relativ hoch ist, während DHTR > β·DDTRex gilt,
wobei β ein vorgegebener Faktor zwischen 0 und 1 ist, vorzugsweise im Bereich zwischen 0,8 und 0,95.

13. Verfahren nach Anspruch 1, wobei im Falle eines Betriebs in einer Lese-Betriebsart Daten, die von dem Träger gelesen wurden, zeitweilig in einem Puffer (5) gespeichert werden, während Daten, die zu dem Hostsystem (2) übertragen werden sollen, aus dem Puffer (5) entnommen werden;
wobei, falls das Hostsystem (2) in einer Betriebsart des Streaming-Lesens arbeitet, die Trägergeschwindigkeit erhöht wird, falls:
der Füllstand des Puffers (5) unter einem ersten, relativ niedrigen Schwellwert liegt;
und DHTR > α·DDTR gilt, wobei α ein Faktor zwischen 0 und 1 ist, vorzugsweise zwischen 0,8 und 0,95;
und die aktuelle Geschwindigkeit niedriger als die maximale Trägergeschwindigkeit ist;
und die Anzahl von Blöcken (NGB), welche zuvor ohne Fehler gelesen worden sind, größer als eine gewisse minimale Anzahl ist;
und die Zeit, welche seit dem vorhergehenden Beschleunigungsschritt vergangen ist, länger als eine gewisse erste minimale Wartezeit ist;
und die Zeit, welche seit dem vorhergehenden Verlangsamungsschritt vergangen ist, länger als eine gewisse zweite minimale Wartezeit ist, wobei diese zweite minimale Wartezeit vorzugsweise eine Dauer hat, die länger als die Dauer der ersten minimalen Wartezeit ist.

14. Verfahren nach Anspruch 1, wobei im Falle eines Betriebs in einer Lese-Betriebsart Daten, die von dem Träger gelesen wurden, zeitweilig in einem Puffer (5) gespeichert werden, während Daten, die zu dem Hostsystem (2) übertragen werden sollen, aus dem Puffer (5) entnommen werden;
wobei, falls das Hostsystem (2) in einer Betriebsart des Streaming-Lesens arbeitet, die Trägergeschwindigkeit verringert wird, falls:
der Füllstand des Puffers (5) über einem zweiten, relativ hohen Schwellwert liegt;
und DHTR < β·DDTRex gilt, wobei β ein Faktor zwischen 0 und 1 ist, vorzugsweise zwischen 0,8 und 0,95, und wobei DDTRex die erwartete Übertragungsgeschwindigkeit Träger/Laufwerk bei der durch den Verlangsamungsschritt erreichten Trägergeschwindigkeit ist;
und die aktuelle Geschwindigkeit höher als die minimale Trägergeschwindigkeit ist;
und die Zeit, welche seit dem vorhergehenden Verlangsamungsschritt vergangen ist, länger als eine gewisse erste minimale Wartezeit ist;
und die Zeit, welche seit dem vorhergehenden Beschleunigungsschritt vergangen ist, länger als eine gewisse zweite minimale Wartezeit ist, wobei diese zweite minimale Wartezeit vorzugsweise eine Dauer hat, die länger als die Dauer der ersten minimalen Wartezeit ist.

15. Verfahren nach Anspruch 1, wobei im Falle eines Betriebs in einer Schreib-Betriebsart Daten, die von dem Hostsystem (2) empfangen wurden, zeitweilig in einem Puffer (5) gespeichert werden, während Daten, die auf den Träger geschrieben werden sollen, aus dem Puffer (5) entnommen werden;
wobei, falls das Hostsystem (2) in einer Betriebsart des Streaming-Schreibens arbeitet, die Trägergeschwindigkeit erhöht wird, falls:
der Füllstand des Puffers (5) über einem ersten, relativ hohen Schwellwert liegt;
und DHTR < ϕ·DDTR gilt, wobei ϕ ein Faktor zwischen 0 und 1 ist, vorzugsweise zwischen 0,8 und 0,95;
und die aktuelle Geschwindigkeit niedriger als die maximale Trägergeschwindigkeit ist;
und die Zeit, welche seit dem vorhergehenden Beschleunigungsschritt vergangen ist, länger als eine gewisse erste minimale Wartezeit ist;
und die Zeit, welche seit dem vorhergehenden Verlangsamungsschritt vergangen ist, länger als eine gewisse zweite minimale Wartezeit ist, wobei diese zweite minimale Wartezeit vorzugsweise eine Dauer hat, die länger als die Dauer der ersten minimalen Wartezeit ist.

16. Verfahren nach Anspruch 1, wobei im Falle eines Betriebs in einer Schreib-Betriebsart Daten, die von dem Hostsystem (2) empfangen wurden, zeitweilig in einem Puffer (5) gespeichert werden, während Daten, die auf den Träger geschrieben werden sollen, aus dem Puffer (5) entnommen werden;
wobei, falls das Hostsystem (2) in einer Betriebsart des Streaming-Schreibens arbeitet, die Trägergeschwindigkeit verringert wird, falls:
der Füllstand des Puffers (5) unter einem zweiten, relativ niedrigen Schwellwert liegt;
und DHTR < δ·DDTRex gilt, wobei δ ein Faktor zwischen 0 und 1 ist, vorzugsweise zwischen 0,8 und 0,95, und wobei DDTRex die erwartete Übertragungsgeschwindigkeit Träger/Laufwerk bei der durch den Verlangsamungsschritt erreichten Trägergeschwindigkeit ist;
und die aktuelle Geschwindigkeit höher als die minimale Trägergeschwindigkeit ist;
und die Zeit, welche seit dem vorhergehenden Verlangsamungsschritt vergangen ist, länger als eine gewisse erste minimale Wartezeit ist;
und die Zeit, welche seit dem vorhergehenden Beschleunigungsschritt vergangen ist, länger als eine gewisse zweite minimale Wartezeit ist, wobei diese zweite minimale Wartezeit vorzugsweise eine Dauer hat, die länger als die Dauer der ersten minimalen Wartezeit ist.

17. Verfahren nach Anspruch 1, wobei im Falle eines Betriebs in einer Lese-Betriebsart Daten, die von dem Träger gelesen wurden, zeitweilig in einem Puffer (5) gespeichert werden, während Daten, die zu dem Hostsystem (2) übertragen werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 110);
- Messen der mittleren Übertragungsgeschwindigkeit Laufwerk/Host (DHTR) (Schritt 111);
- Berechnen einer Zielgeschwindigkeit, die niedriger als die aktuelle Geschwindigkeit ist;
- Berechnen der erwarteten Übertragungsgeschwindigkeit Träger/Laufwerk (DDTRex) bei der Zielgeschwindigkeit;
- Prüfen des Pufferfüllstandes (Schritt 150);
* falls der Pufferfüllstand relativ niedrig ist:
Vergleichen der mittleren Übertragungsgeschwindigkeit Laufwerk/Host (DHTR) mit der aktuellen Übertragungsgeschwindigkeit Träger/Laufwerk (DDTR) (Schritt 151) und Entscheiden, die aktuelle Geschwindigkeit beizubehalten (Schritt 160), falls DHTR < α·DDTR gilt;
* falls der Pufferfüllstand relativ hoch ist:
Vergleichen der mittleren Übertragungsgeschwindigkeit Laufwerk/Host (DHTR) mit der erwarteten Übertragungsgeschwindigkeit Träger/Laufwerk (DDTRex) (Schritt 152) und Entscheiden, die aktuelle Geschwindigkeit beizubehalten (Schritt 160), falls DHTR > β·DDTRex gilt;
wobei α ein vorgegebener Faktor zwischen 0 und 1 ist, vorzugsweise im Bereich zwischen 0,8 und 0,95;
und wobei β ein vorgegebener Faktor zwischen 0 und 1 ist, vorzugsweise im Bereich zwischen 0,8 und 0,95.

18. Verfahren nach Anspruch 1, wobei im Falle eines Betriebs in einer Schreib-Betriebsart Daten, die von dem Hostsystem (2) empfangen wurden, zeitweilig in einem Puffer (5) gespeichert werden, während Daten, die auf den Träger geschrieben werden sollen, aus dem Puffer (5) entnommen werden;
wobei das Verfahren die folgenden Schritte umfasst:
- Messen der Übertragungsgeschwindigkeit Träger/Laufwerk (DDTR) (Schritt 210);
- Messen der mittleren Übertragungsgeschwindigkeit Laufwerk/Host (DHTR) (Schritt 211);
- Berechnen einer Zielgeschwindigkeit, die niedriger als die aktuelle Geschwindigkeit ist;
- Berechnen der erwarteten Übertragungsgeschwindigkeit Träger/Laufwerk (DDTRex) bei der Zielgeschwindigkeit;
- Prüfen des Pufferfüllstandes (Schritt 250);
* falls der Pufferfüllstand relativ hoch ist:
Vergleichen der mittleren Übertragungsgeschwindigkeit Laufwerk/Host (DHTR) mit der aktuellen Übertragungsgeschwindigkeit Träger/Laufwerk (DDTR) (Schritt 251) und Entscheiden, die aktuelle Geschwindigkeit beizubehalten (Schritt 260), falls DHTR < ϕ·DDTR gilt;
* falls der Pufferfüllstand relativ niedrig ist:
Vergleichen der mittleren Übertragungsgeschwindigkeit Laufwerk/Host (DHTR) mit der erwarteten Übertragungsgeschwindigkeit Träger/Laufwerk (DDTRex) (Schritt 252) und Entscheiden, die aktuelle Geschwindigkeit beizubehalten (Schritt 260), falls DHTR > δ·DDTRex gilt;
wobei ϕ ein vorgegebener Faktor zwischen 0 und 1 ist, vorzugsweise im Bereich zwischen 0,8 und 0,95;
und wobei δ ein vorgegebener Faktor zwischen 0 und 1 ist, vorzugsweise im Bereich zwischen 0,8 und 0,95.

19. Verfahren nach einem der vorhergehenden Ansprüche, wobei der Träger eine Platte ist, zum Beispiel eine optische Platte oder eine Festplatte.

20. Trägerlaufwerk (3) zum Schreiben/Lesen von Informationen in einen/von einem Datenträger (4), wobei das Laufwerk so beschaffen ist, dass es das Verfahren gemäß einem der vorhergehenden Ansprüche ausführen kann.

21. Datenübertragungssystem (1), welches ein Hostsystem (2) und ein Trägerlaufwerk (3) nach Anspruch 20 umfasst, wobei das Hostsystem (2) und das Trägerlaufwerk (3) über eine Datenübertragungsverbindung (7) miteinander kommunizieren.

22. Hostsystem (2), welches in der Lage ist, mit einem Trägerlaufwerk (3) zum Schreiben/Lesen von Informationen in einen/von einem Datenträger (4) zu kommunizieren, wobei das Trägerlaufwerk (3) von einem Typ ist, welcher auf Anweisungen zur Geschwindigkeitseinstellung reagiert, um eine Trägergeschwindigkeit zu erhöhen oder zu verringern;
wobei das Hostsystem in der Lage ist, Anweisungen zur Geschwindigkeitseinstellung zu dem Trägerlaufwerk (3) zu senden;
wobei das Hostsystem so beschaffen ist, dass es das Verfahren nach einem der vorhergehenden Ansprüche 1-19 ausführen kann.

23. Datenübertragungssystem (1), welches ein Hostsystem (2) nach Anspruch 22 und ein Trägerlaufwerk (3) zum Schreiben/Lesen von Informationen in einen/von einem Datenträger (4) umfasst, wobei das Trägerlaufwerk (3) von einem Typ ist, welcher auf Anweisungen zur Geschwindigkeitseinstellung reagiert, um eine Trägergeschwindigkeit zu erhöhen oder zu verringern;
wobei das Hostsystem (2) und das Trägerlaufwerk (3) über eine Datenübertragungsverbindung (7) miteinander kommunizieren.

## Revendications

1. Procédé de réglage d'une vitesse de support de données dans un appareil du type unité de support de données (3) qui est en communication de type transfert de données (7) avec un système hôte (2), où le transfert de données entre support et appareil du type unité se fait à une vitesse de transfert support/unité (DDTR) et où le transfert de données entre appareil du type unité et système hôte se fait à une vitesse de transfert unité/hôte (DHTR);
**caractérisé en ce que** la vitesse de transfert support/unité (DDTR) et la vitesse de transfert unité/hôte (DHTR) sont prises en compte lors du réglage de la vitesse du support.

2. Procédé selon la revendication 1,
- dans lequel une vitesse cible différente de la vitesse courante est calculée;
- dans lequel la vitesse de transfert support/unité attendue (DDTRex) à la vitesse cible est calculée;
- dans lequel la vitesse de transfert unité/hôte (DHTR) est comparée à la vitesse de transfert support/unité attendue (DDTRex);
- et dans lequel la vitesse courante est maintenue si ladite comparaison entre la vitesse de transfert unité/hôte (DHTR) et la vitesse de transfert support/unité attendue (DDTRex) indique qu'un prochain changement de vitesse inverse depuis ladite vitesse cible jusqu'à la vitesse courante doit être attendu si la vitesse était changée en ladite vitesse cible.

3. Procédé selon la revendication 1, dans lequel, dans le cas d'un fonctionnement dans un mode de lecture, des données lues sur le support sont temporairement mémorisées dans une mémoire tampon (5), tandis que des données devant être transférées au système hôte (2) sont retirées de ladite mémoire tampon (5);
- dans lequel, dans le cas d'un fonctionnement dans un mode d'écriture, des données reçues du système hôte (2) sont temporairement mémorisées dans une mémoire tampon (5), tandis que des données devant être écrites sur le support sont retirées de ladite mémoire tampon (5);
le procédé comprenant les étapes de :
- mesure de la vitesse de transfert support/unité (DDTR) (étape 110;210);
- mesure de la vitesse de transfert unité/hôte (DHTR) moyenne (étape 111;211);
- vérification du niveau de remplissage de la mémoire tampon (étape 150;250);
- comparaison de la vitesse de transfert support/unité (DDTR) avec la vitesse de transfert unité/hôte (DHTR) moyenne;
- maintien (étape 160;260) de la vitesse courante si le niveau de remplissage de la mémoire tampon est relativement faible, tandis que la vitesse de transfert d'entrée de la mémoire tampon est relativement élevée, comparée à la vitesse de transfert de sortie de la mémoire tampon.

4. Procédé selon la revendication 1, dans lequel, dans le cas d'un fonctionnement dans un mode de lecture, des données lues sur le support sont temporairement mémorisées dans une mémoire tampon (5), tandis que des données devant être transférées au système hôte (2) sont retirées de ladite mémoire tampon (5);
le procédé comprenant les étapes de :
- mesure de la vitesse de transfert support/unité (DDTR) (étape 110);
- mesure de la vitesse de transfert unité/hôte (DHTR) moyenne (étape 111);
- vérification du niveau de remplissage de la mémoire tampon (étape 150);
- comparaison de la vitesse de transfert support/unité (DDTR) avec la vitesse de transfert unité/hôte (DHTR) moyenne (étape 151);
- maintien (étape 160) de la vitesse courante si le niveau de remplissage de la mémoire tampon est relativement faible alors que DHTR<α.DDTR s'applique,
où α est un facteur prédéterminé compris entre 0 et 1, de préférence dans la plage comprise entre 0,8 et 0,95.

5. Procédé selon la revendication 1, dans lequel, dans le cas d'un fonctionnement dans un mode de lecture, des données lues sur le support sont temporairement mémorisées dans une mémoire tampon (5), tandis que des données devant être transférées au système hôte (2) sont retirées de ladite mémoire tampon (5);
le procédé comprenant les étapes de :
- mesure de la vitesse de transfert support/unité (DDTR) (étape 110);
- calcul d'une vitesse cible plus élevée que la vitesse courante;
- calcul de la vitesse de transfert support/unité attendue (DDTRex) à la vitesse cible;
- mesure de la vitesse de transfert unité/hôte (DHTR) moyenne (étape 111);
- vérification du niveau de remplissage de la mémoire tampon (étape 150);
- comparaison de la vitesse de transfert support/unité attendue (DDTRex) avec la vitesse de transfert unité/hôte (DHTR) moyenne;
- maintien (étape 160) de la vitesse courante si le niveau de remplissage de la mémoire tampon est relativement faible alors que DHTR<α.DDTRex s'applique,
où α est un facteur prédéterminé compris entre 0 et 1, de préférence dans la plage comprise entre 0,8 et 0,95.

6. Procédé selon la revendication 1, dans lequel, dans le cas d'un fonctionnement dans un mode d'écriture, des données reçues du système hôte (2) sont temporairement mémorisées dans une mémoire tampon (5), tandis que des données devant être écrites sur le support sont retirées de ladite mémoire tampon (5);
le procédé comprenant les étapes de :
- mesure de la vitesse de transfert support/unité (DDTR) (étape 210);
- mesure de la vitesse de transfert unité/hôte (DHTR) moyenne (étape 211);
- vérification du niveau de remplissage de la mémoire tampon (étape 250);
- comparaison de la vitesse de transfert support/unité (DDTR) avec la vitesse de transfert unité/hôte (DHTR) moyenne;
- maintien (étape 260) de la vitesse courante si le niveau de remplissage de la mémoire tampon est relativement faible alors que DHTR>δ.DDTR s'applique,
où δ est un facteur prédéterminé compris entre 0 et 1, de préférence dans la plage comprise entre 0,8 et 0,95.

7. Procédé selon la revendication 1, dans lequel, dans le cas d'un fonctionnement dans un mode d'écriture, des données reçues du système hôte (2) sont temporairement mémorisées dans une mémoire tampon (5), tandis que des données devant être écrites sur le support sont retirées de ladite mémoire tampon (5);
le procédé comprenant les étapes de :
- mesure de la vitesse de transfert support/unité (DDTR) (étape 210);
- calcul d'une vitesse cible inférieure à la vitesse courante;
- calcul de la vitesse de transfert support/unité attendue (DDTRex) à la vitesse cible;
- mesure de la vitesse de transfert unité/hôte (DHTR) moyenne (étape 211);
- vérification du niveau de remplissage de la mémoire tampon (étape 250);
- comparaison de la vitesse de transfert unité/hôte (DHTR) moyenne avec la vitesse de transfert support/unité attendue (DDTRex) (étape 252);
- maintien (étape 260) de la vitesse courante si le niveau de remplissage de la mémoire tampon est relativement faible alors que DHTR>δ.DDTRex s'applique,
où δ est un facteur prédéterminé compris entre 0 et 1, de préférence dans la plage comprise entre 0,8 et 0,95.

8. Procédé selon la revendication 1, dans lequel, dans le cas d'un fonctionnement dans un mode de lecture, des données lues sur le support sont temporairement mémorisées dans une mémoire tampon (5), tandis que des données devant être transférées au système hôte (2) sont retirées de ladite mémoire tampon (5);
dans lequel, dans le cas d'un fonctionnement dans un mode d'écriture, des données reçues du système hôte (2) sont temporairement mémorisées dans une mémoire tampon (5), tandis que des données devant être écrites sur le support sont retirées de ladite mémoire tampon (5);
le procédé comprenant les étapes de:
- mesure de la vitesse de transfert support/unité (DDTR) (étape 110;210);
- mesure de la vitesse de transfert unité/hôte (DHTR) moyenne (étape 111;211);
- vérification du niveau de remplissage de la mémoire tampon (étape 150;250);
- comparaison de la vitesse de transfert support/unité (DDTR) avec la vitesse de transfert unité/hôte (DHTR) moyenne;
- maintien (étape 160;260) de la vitesse courante si le niveau de remplissage de la mémoire tampon est relativement élevé tandis que la vitesse de transfert d'entrée de la mémoire tampon est relativement faible, comparée à la vitesse de transfert de sortie de la mémoire tampon.

9. Procédé selon la revendication 1, dans lequel, dans le cas d'un fonctionnement dans un mode d'écriture, des données reçues du système hôte (2) sont temporairement mémorisées dans une mémoire tampon (5), tandis que des données devant être écrites sur le support sont retirées de ladite mémoire tampon (5);
le procédé comprenant les étapes de :
- mesure de la vitesse de transfert support/unité (DDTR) (étape 210);
- mesure de la vitesse de transfert unité/hôte (DHTR) moyenne (étape 211);
- vérification du niveau de remplissage de la mémoire tampon (étape 250);
- comparaison de la vitesse de transfert support/unité (DDTR) avec la vitesse de transfert unité/hôte (DHTR) moyenne (étape 251);
- maintien (étape 260) de la vitesse courante si le niveau de remplissage de la mémoire tampon est relativement élevé alors que DHTR<ϕ.DDTR s'applique,
où ϕ est un facteur prédéterminé compris entre 0 et 1, de préférence dans la plage comprise entre 0,8 et 0,95.

10. Procédé selon la revendication 1, dans lequel, dans le cas d'un fonctionnement dans un mode d'écriture, des données reçues du système hôte (2) sont temporairement mémorisées dans une mémoire tampon (5), tandis que des données devant être écrites sur le support sont retirées de ladite mémoire tampon (5);
le procédé comprenant les étapes de :
- mesure de la vitesse de transfert support/unité (DDTR) (étape 210);
- calcul d'une vitesse cible plus élevée que la vitesse courante;
- calcul de la vitesse de transfert support/unité attendue (DDTRex) à la vitesse cible;
- mesure de la vitesse de transfert unité/hôte (DHTR) moyenne (étape 211);
- vérification du niveau de remplissage de la mémoire tampon (étape 250);
- comparaison de la vitesse de transfert support/unité attendue (DDTRex) avec la vitesse de transfert unité/hôte (DHTR) moyenne (étape 251);
- maintien (étape 260) de la vitesse courante si le niveau de remplissage de la mémoire tampon est relativement élevé alors que DHTR<ϕ.DDTRex s'applique,
où ϕ est un facteur prédéterminé compris entre 0 et 1, de préférence dans la plage comprise entre 0,8 et 0,95.

11. Procédé selon la revendication 1, dans lequel, dans le cas d'un fonctionnement dans un mode de lecture, des données lues sur le support sont temporairement mémorisées dans une mémoire tampon (5), tandis que des données devant être transférées au système hôte (2) sont retirées de ladite mémoire tampon (5);
le procédé comprenant les étapes de :
- mesure de la vitesse de transfert support/unité (DDTR) (étape 110);
- mesure de la vitesse de transfert unité/hôte (DHTR) moyenne (étape 111);
- vérification du niveau de remplissage de la mémoire tampon (étape 150);
- comparaison de la vitesse de transfert support/unité (DDTR) avec la vitesse de transfert unité/hôte (DHTR) moyenne;
- maintien (étape 160) de la vitesse courante si le niveau de remplissage de la mémoire tampon est relativement élevé alors que DHTR>β.DDTR s'applique,
où β est un facteur prédéterminé compris entre 0 et 1, de préférence dans la plage comprise entre 0,8 et 0,95.

12. Procédé selon la revendication 1, dans lequel, dans le cas d'un fonctionnement dans un mode de lecture, des données lues sur le support sont temporairement mémorisées dans une mémoire tampon (5), tandis que des données devant être transférées au système hôte (2) sont retirées de ladite mémoire tampon (5);
le procédé comprenant les étapes de :
- mesure de la vitesse de transfert support/unité (DDTR) (étape 110);
- calcul d'une vitesse cible inférieure à la vitesse courante;
- calcul de la vitesse de transfert support/unité attendue (DDTRex) à la vitesse cible;
- mesure de la vitesse de transfert unité/hôte (DHTR) moyenne (étape 111);
- vérification du niveau de remplissage de la mémoire tampon (étape 150);
- comparaison de la vitesse de transfert unité/hôte (DHTR) moyenne avec la vitesse de transfert support/unité attendue (DDTRex) (étape 152);
- maintien (étape 160) de la vitesse courante si le niveau de remplissage de la mémoire tampon est relativement élevé alors que DHTR>β.DDTRex s'applique,
où β est un facteur prédéterminé compris entre 0 et 1, de préférence dans la plage comprise entre 0,8 et 0,95.

13. Procédé selon la revendication 1, dans lequel, dans le cas d'un fonctionnement dans un mode de lecture, des données lues sur le support sont temporairement mémorisées dans une mémoire tampon (5), tandis que des données devant être transférées au système hôte (2) sont retirées de ladite mémoire tampon (5);
où, si le système hôte (2) est en train d'opérer dans un mode de lecture en continu, la vitesse du support est augmentée si :
le niveau de remplissage de la mémoire tampon (5) est inférieur à un premier seuil relativement faible;
et DHTR>α.DDTR, où α est un facteur compris entre 0 et 1, de préférence entre 0,8 et 0,95;
et la vitesse courante est inférieure à la vitesse maximale du support;
et le nombre de blocs (NGB) qui ont été précédemment lus sans erreur est supérieur à une certaine valeur minimale;
et le temps qui s'est écoulé depuis l'étape d'accélération précédente est plus long qu'un certain premier temps d'attente minimum;
et le temps qui s'est écoulé depuis l'étape de ralentissement précédente est plus long qu'un certain second temps d'attente minimum, ce second temps d'attente minimum ayant de préférence une durée supérieure à la durée dudit premier temps d'attente minimum.

14. Procédé selon la revendication 1, dans lequel, dans le cas d'un fonctionnement dans un mode de lecture, des données lues sur le support sont temporairement mémorisées dans une mémoire tampon (5), tandis que des données devant être transférées au système hôte (2) sont retirées de ladite mémoire tampon (5);
où, si le système hôte (2) est en train d'opérer dans un mode de lecture en continu, la vitesse du support est diminuée si :
le niveau de remplissage de la mémoire tampon (5) est supérieur à un second seuil relativement élevé;
et DHTR<β.DDTRex, où β est un facteur compris entre 0 et 1, de préférence entre 0,8 et 0,95, et où DDTRex est la vitesse de transfert support/unité attendue à la vitesse du support atteinte par l'étape de ralentissement;
et la vitesse courante est plus élevée que la vitesse minimale du support;
et le temps qui s'est écoulé depuis l'étape de ralentissement précédente est plus long qu'un certain premier temps d'attente minimum;
et le temps qui s'est écoulé depuis l'étape d'accélération précédente est plus long qu'un certain second temps d'attente minimum, ce second temps d'attente minimum ayant de préférence une durée supérieure à la durée dudit premier temps d'attente minimum.

15. Procédé selon la revendication 1, dans lequel, dans le cas d'un fonctionnement dans un mode d'écriture, des données reçues du système hôte (2) sont temporairement mémorisées dans une mémoire tampon (5), tandis que des données devant être écrites sur le support sont retirées de ladite mémoire tampon (5);
où, si le système hôte (2) est en train d'opérer dans un mode d'écriture en continu, la vitesse du support est augmentée si :
le niveau de remplissage de la mémoire tampon (5) est supérieur à un premier seuil relativement élevé;
et DHTR<ϕ.DDTR, où ϕ est un facteur compris entre 0 et 1, de préférence entre 0,8 et 0,95;
et la vitesse courante est inférieure à la vitesse maximale du support;
et le temps qui s'est écoulé depuis l'étape d'accélération précédente est plus long qu'un certain premier temps d'attente minimum;
et le temps qui s'est écoulé depuis l'étape de ralentissement précédente est plus long qu'un certain second temps d'attente minimum, ce second temps d'attente minimum ayant de préférence une durée supérieure à la durée dudit premier temps d'attente minimum.

16. Procédé selon la revendication 1, dans lequel, dans le cas d'un fonctionnement dans un mode d'écriture, des données reçues du système hôte (2) sont temporairement mémorisées dans une mémoire tampon (5), tandis que des données devant être écrites sur le support sont retirées de ladite mémoire tampon (5);
où, si le système hôte (2) est en train d'opérer dans un mode d'écriture en continu, la vitesse du support est diminuée si :
le niveau de remplissage de la mémoire tampon (5) est inférieur à un second seuil relativement faible;
et DHTR<δ.DDTRex, où δ est un facteur compris entre 0 et 1, de préférence entre 0,8 et 0,95, et où DDTRex est la vitesse de transfert support/unité attendue à la vitesse du support atteinte par l'étape de ralentissement;
et la vitesse courante est plus élevée que la vitesse minimale du support;
et le temps qui s'est écoulé depuis l'étape de ralentissement précédente est plus long qu'un certain premier temps d'attente minimum;
et le temps qui s'est écoulé depuis l'étape d'accélération précédente est plus long qu'un certain second temps d'attente minimum, ce second temps d'attente minimum ayant de préférence une durée supérieure à la durée dudit premier temps d'attente minimum.

17. Procédé selon la revendication 1, dans lequel, dans le cas d'un fonctionnement dans un mode de lecture, des données lues sur le support sont temporairement mémorisées dans une mémoire tampon (5), tandis que des données devant être transférées au système hôte (2) sont retirées de ladite mémoire tampon (5);
le procédé comprenant les étapes de :
- mesure de la vitesse de transfert support/unité (DDTR) (étape 110);
- mesure de la vitesse de transfert unité/hôte (DHTR) moyenne (étape 111);
- calcul d'une vitesse cible inférieure à la vitesse courante;
- calcul de la vitesse de transfert support/unité attendue (DDTRex) à la vitesse cible;
- vérification du niveau de remplissage de la mémoire tampon (étape 150);
* si le niveau de remplissage de la mémoire tampon est relativement faible :
comparaison de la vitesse de transfert unité/hôte (DHTR) moyenne avec la vitesse de transfert support/unité (DDTR) courante (étape 151) et décision de maintenir (étape 160) la vitesse courante si DHTR<α.DDTR s'applique;
* si le niveau de remplissage de la mémoire tampon est relativement élevé :
comparaison de la vitesse de transfert unité/hôte (DHTR) moyenne avec la vitesse de transfert support/unité attendue (DDTRex) (étape 152) et décision de maintenir (étape 160) la vitesse courante si DHTR>β.DDTRex s'applique;
où α est un facteur prédéterminé compris entre 0 et 1, de préférence dans la plage comprise entre 0,8 et 0,95;
et où β est un facteur prédéterminé compris entre 0 et 1, de préférence dans la plage comprise entre 0,8 et 0,95.

18. Procédé selon la revendication 1, dans lequel, dans le cas d'un fonctionnement dans un mode d'écriture, des données reçues du système hôte (2) sont temporairement mémorisées dans une mémoire tampon (5), tandis que des données devant être écrites sur le support sont retirées de ladite mémoire tampon (5);
le procédé comprenant les étapes de :
- mesure de la vitesse de transfert support/unité (DDTR) (étape 210);
- mesure de la vitesse de transfert unité/hôte (DHTR) moyenne (étape 211);
- calcul d'une vitesse cible inférieure à la vitesse courante;
- calcul de la vitesse de transfert support/unité attendue (DDTRex) à la vitesse cible;
- vérification du niveau de remplissage de la mémoire tampon (étape 250);
* si le niveau de remplissage de la mémoire tampon est relativement élevé :
comparaison de la vitesse de transfert unité/hôte (DHTR) moyenne avec la vitesse de transfert support/unité (DDTR) courante (étape 251) et décision de maintenir (étape 260) la vitesse courante si DHTR<ϕ.DDTR s'applique;
* si le niveau de remplissage de la mémoire tampon est relativement faible :
comparaison de la vitesse de transfert unité/hôte (DHTR) moyenne avec la vitesse de transfert support/unité attendue (DDTRex) (étape 252) et décision de maintenir (étape 260) la vitesse courante si DHTR>δ.DDTRex s'applique;
où ϕ est un facteur prédéterminé compris entre 0 et 1, de préférence dans la plage comprise entre 0,8 et 0,95;
et où δ est un facteur prédéterminé compris entre 0 et 1, de préférence dans la plage comprise entre 0,8 et 0,95.

19. Procédé selon l'une quelconque des revendications précédentes, dans lequel le support est un disque, par exemple un disque optique ou un disque dur.

20. Appareil du type unité de support (3) pour écrire/lire des informations sur un support de données (4), l'appareil étant adapté pour exécuter le procédé selon l'une quelconque des revendications précédentes.

21. Système de transfert de données (1), comprenant un système hôte (2) et un appareil du type unité de support (3) selon la revendication 20, le système hôte (2) et l'appareil du type unité de support (3) étant en communication de type transfert de données (7) l'un avec l'autre.

22. Système hôte (2), en mesure de communiquer avec un appareil du type unité de support (3) pour écrire/lire des informations sur un support de données (4), l'appareil du type unité de support (3) étant d'un type qui réagit à des instructions de réglage de vitesse pour augmenter ou diminuer une vitesse du support;
le système hôte étant en mesure d'envoyer des instructions de réglage de vitesse à l'appareil du type unité de support (3);
où le système hôte est adapté pour exécuter le procédé selon l'une quelconque des revendications précédentes 1-19.

23. Système de transfert de données (1), comprenant un système hôte (2) selon la revendication 22 et un appareil du type unité de support (3) pour écrire/lire des informations sur un support de données (4), l'appareil du type unité de support (3) étant d'un type qui réagit à des instructions de réglage de vitesse pour augmenter ou diminuer une vitesse du support;
le système hôte (2) et l'appareil du type unité de support (3) étant en communication de type transfert de données (7) l'un avec l'autre.
